# FASCICULE DE BREVET EUROPEEN

(11) **EP 3 992 730 B1**
(45) Date de publication et mention de la délivrance du brevet: **06.05.2026**
(21) Numéro de dépôt: 20204754.4
(22) Date de dépôt: 29.10.2020
(51) Int. Cl.: F16C 27/00, F16C 35/04, G04B 17/04, F16C 11/12, G04B 31/00

(54) **GUIDAGE FLEXIBLE AVEC TABLE DE TRANSLATION REGLABLE POUR MECANISME RESONATEUR ROTATIF, NOTAMMENT D'UN MOUVEMENT D'HORLOGERIE**
FLEXIBLE FÜHRUNG MIT REGULIERBAREM VERSCHIEBETISCH FÜR EINEN ROTIERENDEN RESONATORMECHANISMUS, INSBESONDERE EINES UHRWERKS
FLEXIBLE GUIDE WITH ADJUSTABLE TRANSLATION TABLE FOR ROTARY RESONATOR MECHANISM, IN PARTICULAR FOR A TIMEPIECE MOVEMENT

(43) Date de publication de la demande: 04.05.2022
(73) Titulaire: The Swatch Group Research and Development Ltd, 2074 Marin (CH)
(72) Inventeur: KAHROBAIYAN, Mohammad Hussein, 2043 Boudevilliers (CH)
(74) Mandataire: ICB SA

(56) Documents cités:
- EP-A2- 2 273 323
- CH-A1- 714 992
- "Flexure Pivot Oscillators for Mechanical Watches", 18 June 2020, article ETIENNE F. G. THALMANN: "Flexure Pivot Oscillators for Mechanical Watches", XP055731304, DOI: 10.5075/epfl-thesis-8802

## Description

### Domaine de l'invention

La présente invention concerne un guidage flexible avec table de translation réglable pour mécanisme résonateur rotatif, notamment d'un mouvement d'horlogerie. L'invention se rapporte encore à un mécanisme résonateur rotatif muni d'un tel guidage flexible.

### Arrière-plan de l'invention

La plupart des montres mécaniques actuelles sont munie d'un balancier-spiral et d'un mécanisme d'échappement à ancre suisse. Le balancier-spiral constitue la base de temps de la montre. On l'appelle aussi résonateur.

L'échappement, quant à lui, remplit deux fonctions principales:
- entretenir les va-et-vient du résonateur ;
- compter ces va-et-vient.

Pour constituer un résonateur mécanique, il faut un élément inertiel, un guidage et un élément de rappel élastique. Traditionnellement, un ressort spiral joue le rôle d'élément de rappel élastique pour l'élément inertiel que constitue un balancier. Ce balancier est guidé en rotation par des pivots qui tournent dans des paliers lisses en rubis. Cela donne lieu à des frottements, et donc à des pertes d'énergie et des perturbations de marche, qui dépendent des positions, et que l'on cherche à supprimer.

On utilise aujourd'hui des guidages flexibles comme ressort pour former un pivot virtuel. Les guidages flexibles à pivot virtuel permettent d'améliorer sensiblement les résonateurs horlogers. Les plus simples sont des pivots à lames croisées, composés de deux dispositifs de guidage à lames droites qui se croisent, en général perpendiculairement. Ces deux lames peuvent être, soit tridimensionnelles dans deux plans différents, soit bidimensionnelles dans un même plan et sont alors comme soudées à leur point de croisement.

Cependant, lorsqu'on veut utiliser des lames flexibles pour faire pivoter un balancier annulaire rotatif de manière semblable au mouvement d'un balancier avec un spiral, on n'arrive pas à obtenir un mouvement isochrone. En effet, on n'arrive pas à obtenir mouvement rotatif de la masse parfaitement périodique. Le couple de rappel n'est pas linéaire, ce qui engendre un anisochronisme en fonction de l'amplitude de déplacement de la masse et une erreur de marche du mouvement. Le document d'Etienne F. G. Thalmann, "Flexure Pivot Oscillators for Mechanical Watches", montre un guidage flexible pour oscillateur d'horlogerie.

### Résumé de l'invention

Un but de l'invention est, par conséquent, de proposer un guidage flexible pour mécanisme résonateur rotatif, qui évite les problèmes précités.

A cet effet, l'invention concerne un guidage flexible pour un mécanisme résonateur rotatif, notamment d'un mouvement d'horlogerie, le guidage comprenant un support fixe, un élément mobile par rapport au support fixe, au moins une lame flexible principale permettant à l'élément mobile de se déplacer par rapport au support fixe par flexion de la ou des lames flexibles principales dans un mouvement rotatif autour d'un centre de rotation, le guidage flexible étant agencé sensiblement dans un plan.

Le guidage flexible est remarquable en ce qu'il comprend au moins une première table de translation jointe à une extrémité de la lame flexible principale, de sorte que la première table de translation soit configurée pour se déplacer en translation au moins en partie sous l'effet de la flexion de la lame flexible principale, le guidage flexible comportant des moyens de réglage de la rigidité de la première table de translation.

Grâce à l'invention, on obtient un guidage à lames flexibles isochrone. En effet, la table de translation permet à la lame principale de se déplacer lorsqu'elle se courbe, et les moyens de réglage permettent de modifier la rigidité de la table de translation pour régler l'isochronisme du guidage flexible. Ainsi, on conserve un coefficient de rappel sensiblement constant, de sorte que le mouvement du balancier est isochrone.

Selon une forme de réalisation avantageuse, la table de translation comprend au moins une lame flexible secondaire, de préférence deux lames flexibles secondaires, et une première partie rigide, la lame flexible secondaire étant jointe par une extrémité à la première partie rigide, et par une autre extrémité, soit au support fixe, soit à l'élément mobile, la ou les lames flexibles secondaires étant sensiblement perpendiculaires à la lame flexible principale en position de repos du guidage flexible.

Selon une forme de réalisation avantageuse, les lames flexibles secondaires sont disposées sur des lignes différentes.

Selon une forme de réalisation avantageuse, les lames flexibles secondaires sont sensiblement parallèles.

Selon une forme de réalisation avantageuse, les moyens de réglage comprennent des goupilles pour modifier la longueur effective de la ou des lames flexibles secondaires.

Selon l'invention, les moyens de réglage comprennent un organe d'application d'une force ou d'un couple sur une partie rigide d'une table de translation.

Selon une forme de réalisation avantageuse, la force ou le couple est dirigé parallèlement aux lames flexibles secondaires et perpendiculairement à la lame flexible principale en position de repos du guidage.

Selon une forme de réalisation avantageuse, la force ou le couple est dirigé perpendiculairement aux lames flexibles secondaires et parallèlement à la lame flexible principale en position de repos du guidage.

Selon une forme de réalisation avantageuse, les moyens de réglage comprennent une deuxième table de translation agencée entre l'organe d'application et la partie rigide de la première table de translation.

Selon une forme de réalisation avantageuse, la deuxième table de translation comprend une deuxième partie rigide, et au moins une lame flexible tertiaire, de préférence deux lames flexibles tertiaires, reliant la deuxième partie rigide à la première partie rigide de la première table de translation, la ou les lames tertiaires étant sensiblement perpendiculaires ou parallèles à la lame flexible principale en position de repos du guidage flexible.

Selon une forme de réalisation avantageuse, les moyens de réglage comprennent une troisième table de translation agencée entre l'organe d'application et la deuxième partie rigide de la deuxième table de translation.

Selon une forme de réalisation avantageuse, la troisième table de translation comprend une troisième partie rigide, au moins une lame quaternaire, de préférence deux lames quaternaires, reliant la deuxième partie rigide au support, et au moins une lame quinquénaire, de préférence quatre lames quinquénaires, reliant la troisième partie rigide à la deuxième partie rigide de la deuxième table de translation, les lames quaternaire et quinquénaire étant sensiblement parallèles à la lame flexible principale en position de repos du guidage flexible.

Selon une forme de réalisation avantageuse, l'organe d'application comprend une vis excentrique pour appuyer sur la partie rigide de la table de translation.

Selon une forme de réalisation avantageuse, l'organe d'application comporte un élément mobile et un ressort joignant l'élément mobile à la partie rigide, la rigidité de la lame secondaire étant modifiée par le déplacement du support mobile par rapport à la partie rigide.

Selon une forme de réalisation avantageuse, le ressort est hélicoïdal.

Selon une forme de réalisation avantageuse, l'organe d'application comprend un levier et un élément flexible, le levier permettant d'appliquer une force ou un couple prédéfini sur la partie rigide de la table de translation au moyen de l'élément flexible.

Selon une forme de réalisation avantageuse, l'organe d'application comporte des aimants, l'un des aimants étant agencé sur la partie rigide de la table de translation.

Selon une forme de réalisation avantageuse, l'élément mobile comprend la partie centrale.

Selon une forme de réalisation avantageuse, l'élément mobile comprend un balancier centré sur la partie centrale.

Selon une forme de réalisation avantageuse, la partie rigide forme un coude de sorte que des lames de type différent joignant la partie rigide des première et deuxième tables de translation soient perpendiculaires l'une par rapport à l'autre.

L'invention se rapporte aussi à un pivot comprenant au moins deux guidages flexibles, de préférence trois pour être symétrique, chaque guidage étant formé d'une lame principale et d'une table de translation reliée à un support, les couples étant répartis angulairement autour d'une partie centrale, chaque lame principale étant jointe par une extrémité à la partie centrale, l'un au moins des guidages flexibles étant défini selon l'invention.

Selon une forme de réalisation avantageuse, l'élément mobile comprend la partie centrale.

Selon une forme de réalisation avantageuse, l'élément mobile comprend un balancier centré sur la partie centrale.

L'invention se rapporte encore à un mécanisme résonateur rotatif, notamment pour mouvement horloger, le mécanisme comportant un guidage flexible et/ ou un pivot flexible selon l'invention.

### Description sommaire des dessins

D'autres caractéristiques et avantages de la présente invention apparaîtront à la lecture de plusieurs formes de réalisation données uniquement à titre d'exemples non limitatifs, en référence aux dessins annexés dans lesquels :
- la figure 1 représente schématiquement une vue de dessus d'un guidage flexible selon un premier mode de réalisation de l'invention,
- la figure 2 représente schématiquement une vue de dessus du guidage flexible avec un balancier selon un deuxième mode de réalisation de l'invention,
- la figure 3 représente schématiquement une vue de dessus d'un guidage flexible selon une première variante du deuxième mode de réalisation de l'invention,
- la figure 4 représente schématiquement une vue de dessus d'un guidage flexible selon une deuxième variante du deuxième mode de réalisation de l'invention,
- la figure 5 représente schématiquement une vue de dessus d'un guidage flexible selon une troisième variante du deuxième mode de réalisation de l'invention,
- la figure 6 représente schématiquement une vue de dessus d'un guidage flexible selon un troisième mode de réalisation de l'invention,
- la figure 7 représente schématiquement une vue de dessus d'un guidage flexible selon un quatrième mode de réalisation de l'invention,
- la figure 8 représente schématiquement une vue de dessus d'un guidage flexible selon une variante du quatrième mode de réalisation de l'invention,
- la figure 9 représente schématiquement une vue de dessus d'un guidage flexible selon un cinquième mode de réalisation de l'invention,
- la figure 10 représente schématiquement une vue de dessus d'un pivot à lames flexibles avec un balancier, le pivot comprenant un guidage flexible selon la troisième variante du deuxième mode de réalisation de l'invention,
- la figure 11 représente schématiquement une vue de dessus d'un pivot symétrique à lames flexibles comprenant un guidage flexible selon le premier mode de réalisation de l'invention,
- la figure 12 représente schématiquement une vue de dessus d'un guidage flexible selon une première variante du troisième mode de réalisation de l'invention,
- la figure 13 représente schématiquement une vue de dessus d'un guidage flexible selon une deuxième variante du troisième mode de réalisation de l'invention.

### Description détaillée de modes de réalisation préférés

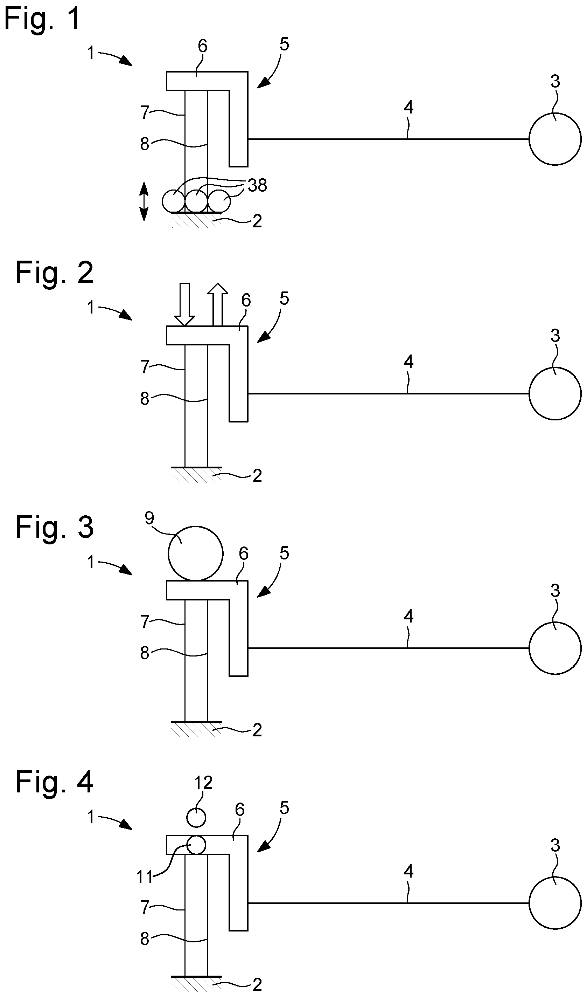

Les figures 1 à 9 montrent un guidage flexible pour un mécanisme résonateur rotatif, notamment d'un mouvement d'horlogerie. Le guidage flexible 1, 10, 20, 30, 40, 50, 60, 70, 80 est agencé sensiblement dans un plan. Le guidage flexible comprend un support fixe 2, un élément mobile 3 par rapport au support fixe 2 et une lame flexible principale 4 reliant l'élément mobile 3 au support 2. La lame flexible principale 4 permet à l'élément mobile 3 de se déplacer par rapport au support fixe 2. Par flexion de la lame flexible principale 4, l'élément mobile 3 peut se déplacer par rapport au support 2 dans un mouvement rotatif autour d'un centre de rotation. L'élément mobile 3 comporte une portion de cylindre circulaire.

Selon l'invention, le guidage flexible 1, 10, 20, 30, 40, 50, 60, 70, 80 comprend une table de translation 5, 15, 25 jointe à une extrémité de la lame flexible principale 4. Dans ce mode de réalisation, la table de translation 5, 15, 25 est agencée en série entre le support fixe 2 et ladite lame flexible principale 4. La table de translation 5, 15, 25 est jointe au support fixe 2 et à une première extrémité de la lame flexible principale 4, la lame flexible principale 4 étant jointe à l'élément mobile 3 par une seconde extrémité. La table de translation 5, 15, 25 est configurée pour se déplacer en translation au moins en partie sous l'effet du mouvement de la lame flexible principale 4. La table de translation 5, 15, 25 comprend au moins une lame flexible secondaire, ici deux lames flexibles secondaires 7, 8, et une partie rigide 6, 16, 26. Les lames flexibles secondaires 7, 8 sont disposées sur des lignes différentes. De préférence, les lames flexibles secondaires 7, 8 sont jointes par une extrémité à une même face de la partie rigide 6, 16, 26 et par une autre extrémité au support fixe 2.

La partie rigide 6, 16, 26 forme ici un coude en angle droit, le coude comportant deux segments sensiblement perpendiculaires. La lame flexible principale 4, est jointe au premier segment, tandis que les lames secondaires 7, 8 sont jointes au deuxième segment. Ainsi, La lame flexible principale 4 est sensiblement perpendiculaire aux lames flexibles secondaires 7, 8 de la table de translation 5, 15, 25 en position repos du guidage 1. La position de repos est définie quand les lames principale 4 et secondaires 7, 8 sont droites, donc non courbées.

Le guidage flexible 1, 10, 20, 30, 40, 50, 60, 70, 80 comprend en outre des moyens de réglage de la rigidité des lames flexibles secondaires 7, 8.

Dans le premier mode de réalisation de la figure 1, non revendiqué, les moyens de réglage de la rigidité des lames flexibles secondaires 7, 8 comprennent des goupilles 38 d'appui sur la ou les lames secondaires 7, 8 de la table de translation 5. Les goupilles 38 sont mobiles pour appuyer à des endroits différents de la longueur des lames flexibles secondaires 7, 8. Ainsi, on modifie la longueur effective des lames flexibles secondaires 7, 8 en les déplaçant. Plus la longueur effective est courte, plus la rigidité augmente. Ainsi, on peut régler le guidage flexible 1 pour le rendre isochrone. Les goupilles 38 sont disposées de part et d'autre de chaque lame secondaire 7, 8. Sur la figure 1, trois goupilles 38 sont agencées de part et d'autre des deux lames 7, 8, une goupille étant agencée entre les deux lames secondaires 7, 8. En éloignant les goupilles 38 du support 2, la longueur des lames 7, 8 comprise entre le support 2 et les goupilles 38 est bloquée et ne contribue plus au mouvement de l'élément mobile 3. Seule la longueur des lames 7, 8 comprise entre les goupilles 38 et la partie rigide 6 de la table de translation 5 est effective dans le mouvement de l'élément mobile 3. Les goupilles 38 sont, de préférence, déplaçables simultanément et appuient sensiblement à la même distance de la longueur des lames flexibles secondaires 7, 8.

Dans le deuxième mode de réalisation, le guidage flexible 10, 20, 30, 40, les moyens de réglage de la rigidité de la lame flexible comprennent un organe d'appui sur la partie rigide 6 de la table de translation, de sorte que la rigidité de la ou des lames secondaires 7, 8 de la table de translation 5 soit modifiée. Le principe général est représenté sur la figure 2. Les moyens de réglage sont configurés pour appliquer une force ou un couple sur la partie rigide 6 de la table de translation 5 parallèlement aux lames secondaires 7, 8. L'intensité d'une telle force ou d'un tel couple rend la ou les lames secondaires 7, 8 plus ou moins rigides. La force ou le couple est transmis aux lames flexibles secondaires 7, 8 par la partie rigide 6. Ainsi, les lames secondaires 7, 8 sont précontraintes par l'organe d'appui, ce qui modifie la rigidité de la ou des lames secondaires 7, 8. Plus la force appliquée est importante, plus les lames 7, 8 sont rigides. Ces moyens de réglage permettent de régler l'isochronisme du guidage flexible en modifiant la rigidité des lames secondaires 7, 8.

Sur la figure 3, la première variante du deuxième mode de réalisation consiste à appliquer une force plus ou moins importante au moyen d'une vis excentrique 9. La tête de vis 9 est en contact avec la partie rigide 6 de la table de translation 5. Ainsi, en tournant la tête de vis 9, on applique une force plus ou moins importante sur la partie rigide 6, car la tête de vis n'est pas centrée sur l'axe de la vis 9. Cette force précontraint les lames secondaires de la table de translation.

En variante du deuxième mode de réalisation, les moyens de réglage du guidage flexible 30 comportent des aimants 11, 12. Un premier aimant 11 est agencé sur la partie rigide 6 de la table de translation 5, et un deuxième aimant 12 est disposé à une distance prédéfinie du premier aimant 11 de la partie rigide 6. Les aimants 11, 12 sont orientés de manière à avoir des pôles identiques se faisant face. Ainsi, en étant proches l'un de l'autre, le deuxième aimant exerce une force de répulsion sur le premier. Alternativement, les pôles peuvent être de signe opposés pour exercer une force de traction sur la partie rigide 6. Ainsi, la rigidité des lames secondaires 7, 8 de la table de translation 5, et donc l'isochronisme, peut être réglé en modifiant la distance entre les deux aimants 11, 12.

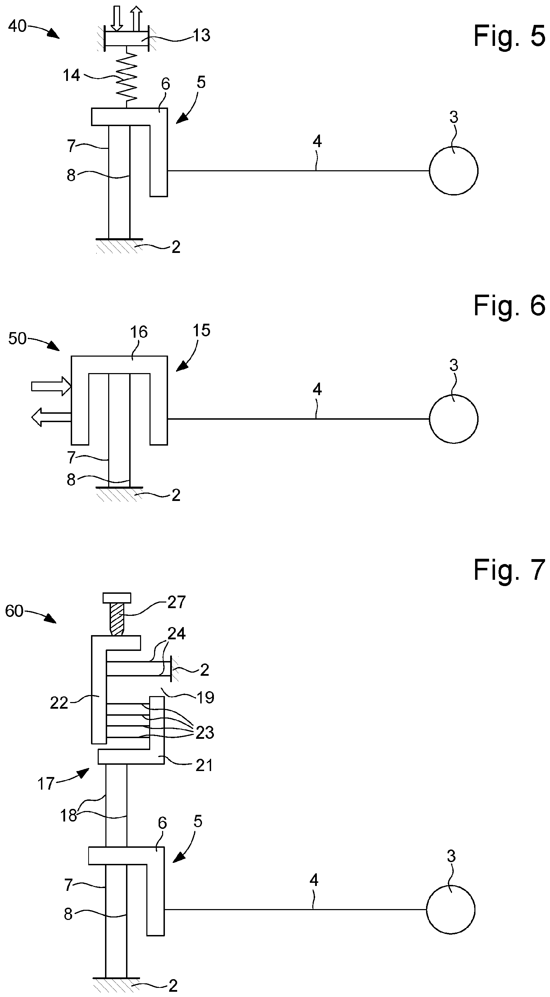

Une troisième variante du deuxième mode de réalisation du guidage flexible 40, représenté sur la figure 5, comprend des moyens de réglage munis d'un ressort 14 et d'un élément mobile 13. Le ressort 14 relie l'élément mobile 13 à la partie rigide 6 de la table de translation 5. L'élément mobile 13 est déplaçable en de multiples positions par rapport à la partie rigide 13. Ainsi, on comprime plus ou moins le ressort, qui exerce alors une force plus ou moins importante sur la partie rigide 6 de la table de translation 5.

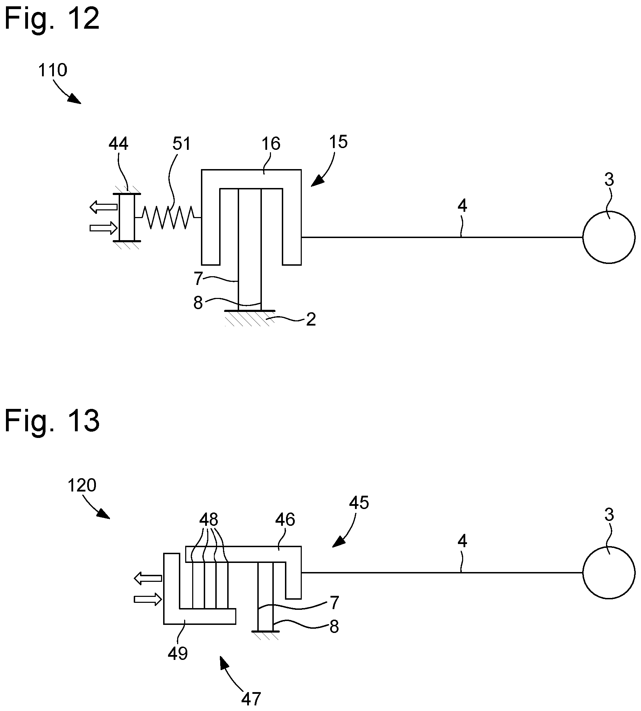

La figure 6 représente une alternative aux variantes du deuxième mode de réalisation, dans laquelle la force ou le couple est exercé perpendiculairement aux lames secondaires 7, 8, et parallèlement à la lame principale 4. Toutes les variantes des moyens de réglage du deuxième de mode réalisation peuvent être utilisées pour appliquer une force ou un couple sur la partie rigide 16 de la table de translation 15. Ainsi, on peut régler la marche du guidage flexible 50. Des exemples de variantes de ce mode de réalisation sont décrits aux figures 12 et 13.

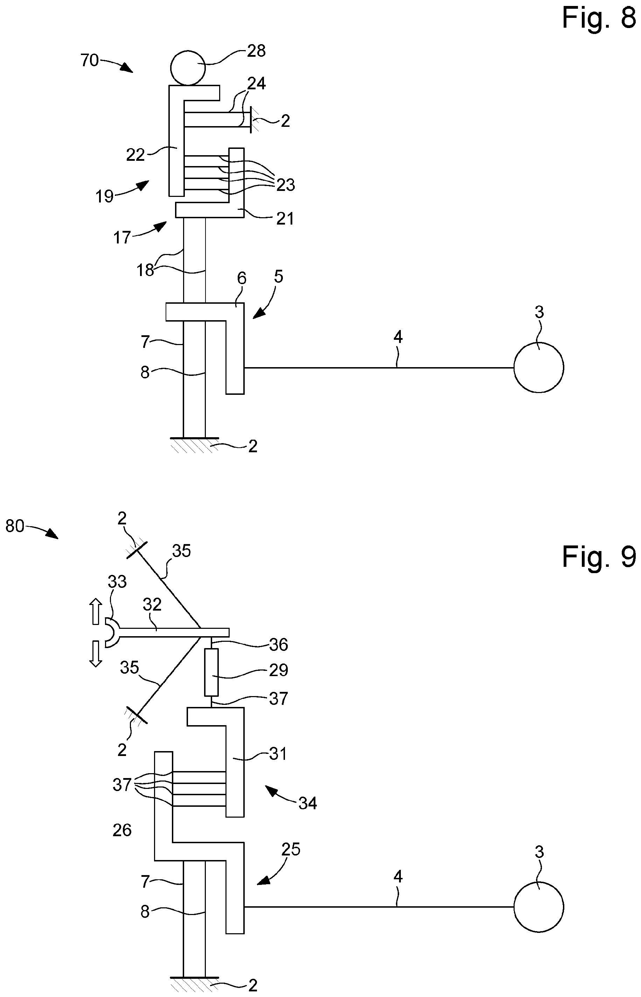

Les figures 7 et 8 représentent deux variantes d'un troisième mode de réalisation dans lequel les moyens de réglage du guidage flexible 60, 70 comprennent une deuxième 17 et une troisième 19 table de translation agencées pour exercer une force ou un couple sur la première table de translation 5. La deuxième table de translation 17 est reliée à la première table de translation 5 par au moins une lame flexible tertiaire, de préférence deux lames flexibles tertiaires 18. Les lames flexibles tertiaires 18 sont sensiblement parallèles aux lames secondaires 7, 8 en position de repos. La deuxième table de translation 17 comprend, une deuxième partie rigide 21, et la troisième table de translation 19 comprend une troisième partie rigide 22. Les deux parties rigides 21, 22 ont chacune, une forme de coin à deux segments perpendiculaires. Les deux parties sont agencées tête-bêche, un segment de la deuxième partie rigide 21 et un segment de la troisième partie 22 étant parallèles deux à deux, lorsque le guidage flexible 60, 70 est en position de repos. La troisième table de translation 19 a pour fonction de guider la force ou le couple dans une direction dirigée vers la première table de translation 5 et de former un ressort avec la deuxième table de translation 17. La deuxième table de translation 17 a pour fonction de transmettre la force ou le couple produit par le ressort à la première table de translation 5.

La troisième partie rigide 22 est reliée d'une part au support fixe 2 par au moins une lame flexible quaternaire, de préférence deux lames flexibles quaternaires 24, et d'autre part à la deuxième partie rigide 21 par au moins une lame flexible quinquénaire, de préférence quatre lames flexibles quinquénaires 23. Les lames flexibles quaternaires 24 et quinquénaires 23 sont sensiblement perpendiculaires aux lames secondaires 7, 8 et tertiaires 18, lorsque le guidage flexible 60, 70 est en position de repos. Les lames flexibles quaternaires 24 ont pour fonction de guider la troisième partie rigide 22 dans une direction permettant de la rapprocher ou de l'éloigner de la deuxième partie rigide 21. Les lames flexibles quinquénaires 23 ont pour fonction de former le ressort entre la troisième partie rigide 22 et la deuxième partie rigide 21, qui transmet la force ou le couple à la première partie rigide 6 de la première table de translation 5 par les lames flexibles tertiaires 18. Le ressort est précontraint par le déplacement de la troisième partie rigide 22 par les moyens de réglage.

Les lames flexibles quaternaires 24 et quinquénaires 23 sont jointes à un seul segment de la partie rigide 21, 22 correspondantes, les deux segments de chaque partie rigide étant parallèles. Ainsi, un segment de chaque partie rigide 21, 22 n'est joint par aucune lame flexible. Ces deux segments sont sensiblement parallèles aux lames flexibles quaternaires 24 et quinquénaires 23, et sensiblement perpendiculaires aux lames secondaires 7, 8 et tertiaires 18.

Les moyens de réglage comportent en outre un moyen d'appui mobile sur la troisième partie rigide 22 de la troisième table de translation 19. Sur la première variante de réalisation de la figure 7, le moyen d'appui mobile comporte une vis 27 dont l'axe appuie sur la troisième partie rigide 22 de la troisième table de translation 19, tandis que la variante de la figure 8 comporte une vis excentrique 28. Les moyens d'appui sont configurés pur déplacer la troisième partie rigide 22 selon une direction parallèle aux lames secondaires 7, 8 et tertiaires 18, et perpendiculaire aux lames primaire 4, quaternaires 24 et quinquénaires 23 en position de repos du guidage. Ainsi, ils permettent d'exercer une force ou un couple plus ou moins important sur la troisième table de translation 19, qui transmet ladite force ou ledit couple à la deuxième table de translation 17, qui la transmet à son tour à la première table de translation 5.

Le quatrième mode de réalisation de la figure 9 du guidage flexible 80 comprend une première table de translation 25, une deuxième table de translation 34 reliée à la première table de translation 25, et des moyens de réglage munis d'un levier 32 connectés à la deuxième table de translation 34 via un élément flexible 29. Le levier 32 comprend une fourchette 33 à une première extrémité, et est connecté à l'élément flexible 29 à sa deuxième extrémité. Le levier 32 est relié au support 2 par deux lames flexibles 35 agencées de part et d'autre du levier. La fourchette 33 permet de déplacer le levier 32 dans une direction du plan du guidage flexible 80.

La première table de translation 25 comprend, en plus des éléments identiques à celles des autres modes de réalisation, une partie rigide 26 munie d'un troisième segment sensiblement perpendiculaire au premier, le troisième segment étant sensiblement parallèle au premier segment, mais décalé vers la deuxième table de translation 34. La deuxième partie rigide 31 de la deuxième table de translation 34 forme un coin à deux segments sensiblement perpendiculaires. Le premier segment est sensiblement parallèle au troisième segment de la première partie rigide 26 de la première table de translation 25. Le deuxième segment est sensiblement parallèle au deuxième segment de la première table de translation 25. La deuxième table de translation 34 comprend des lames flexibles tertiaires, ici quatre lames flexibles tertiaires 37, reliant le troisième segment de la première table de translation 25 au premier segment de la deuxième table de translation 34. Les lames flexibles tertiaires 37 sont sensiblement perpendiculaires aux lames flexibles secondaires 7, 8. L'élément flexible 29 est relié, d'une part au levier 32 par une première lame flexible quaternaire 36, et d'autre part au deuxième segment de la deuxième table de translation 34 par une deuxième lame flexible quaternaire 37. L'élément flexible 29 peut par exemple être une lame flexible plate ou une barre rigide munie d'un col aminci à chaque extrémité pour permettre sa flexion.

En déplaçant la fourchette 33, le levier 32 applique sur l'élément flexible 29 une force ou un couple transmise sur la deuxième table de translation 34.

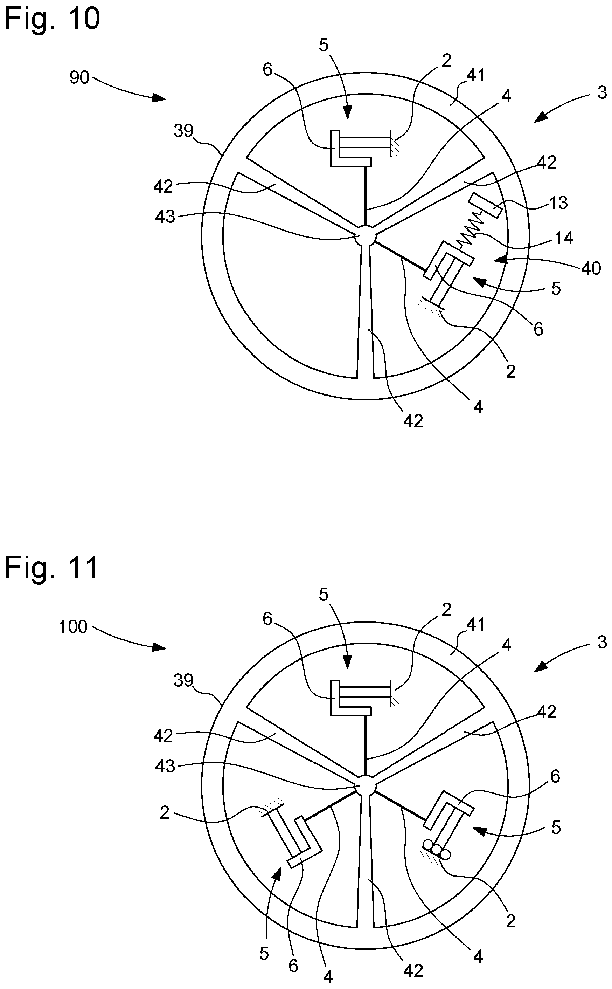

Sur la figure 10, est représenté un premier mode de réalisation d'un pivot 90 pour un mécanisme résonateur rotatif, notamment d'un mouvement d'horlogerie. Le pivot 90 est agencé sensiblement dans un plan. Le pivot 90 comprend un support fixe 2, un élément mobile 3 par rapport au support fixe 2 et deux lames flexibles principales 4 reliant chacune l'élément mobile 3 au support 2. Les lames flexibles principales 4 permettent à l'élément mobile 3 de se déplacer par rapport au support fixe 2. Par flexion des lames flexibles principales 4, l'élément mobile 3 peut se déplacer par rapport au support 2 dans un mouvement rotatif sur lui-même autour d'un centre de rotation. Les lames principales 4 sont, de préférence, de même longueur et réparties angulairement autour d'une partie centrale de l'élément mobile 3.

Selon l'invention, le pivot 90 comprend deux tables de translation 5, chaque table de translation 5 étant jointe à une extrémité d'une lame flexible principales 4 différente. Dans ce mode de réalisation, la table de translation 5 est agencée en série entre le support fixe 2 et ladite lame flexible principale 4 correspondante. La table de translation 5 est jointe au support fixe 2 et à une première extrémité de la lame flexible principale 4 correspondante, la lame flexible principale 4 étant jointe à la partie centrale par une seconde extrémité.

Ainsi, le pivot 90 comprend deux couples, chaque couple étant formé d'une lame flexible principale 4 et d'une table de translation 5. Les couples sont répartis angulairement autour de la partie centrale, chaque lame principale 4 étant jointe par une extrémité à la partie centrale. Les couples, notamment les lames principales 4, forment par exemple un angle d'environ 120° entre eux. La partie centrale est par exemple une portion de cylindre circulaire. Dans ce mode de réalisation, l'élément mobile 3 comprend la partie centrale. Les premières tables de translation 5 sont les mêmes que celles décrites dans les modes de réalisation des guidages flexibles décrits précédemment.

L'élément mobile 3 comprend en outre un balancier 39, qui est en forme d'anneau. Le balancier 16 comporte une partie annulaire 41 externe et des bras 42, ici trois bras, joignant la partie annulaire 41 à une jonction axiale 43 par rapport à la partie annulaire 41. Les bras 42 sont concentriques et de même longueurs. Le balancier 39 est assemblé sur la partie centrale par la jonction 43. De préférence, la partie centrale et la jonction 43 sont monoblocs. Ainsi, le balancier 39 est centré par rapport à la partie centrale. Dans cette variante, le balancier est formé d'une même matière, c'est-à-dire qu'il est monobloc.

Lorsque le balancier 39 est en mouvement, il suit, dans le plan du balancier 39, un mouvement de rotation périodique dans un sens, puis dans l'autre sens, autour d'un axe passant par la jonction 43 et la partie centrale. Les lames flexibles principales 4 se courbent et ont une fonction de ressort rappel du balancier 39 pour le faire tourner dans l'autre sens et réciproquement. Les tables de translation 5 permettent aux lames principales 4 de se déplacer longitudinalement en même temps qu'elles se courbent. Les parties rigides 6 des tables de translation 5 se rapprochent de la partie centrale grâce aux lames secondaires lorsque les lames principales 4 se courbent, et s'éloignent de la partie centrale lorsque les lames principales 4 deviennent droites. Ainsi, on conserve un isochronisme du mouvement du balancier 39.

Sur la figure 11, est représenté un mode de réalisation d'un pivot symétrique 100 pour un mécanisme résonateur rotatif, notamment d'un mouvement d'horlogerie. Le pivot symétrique 100 est agencé sensiblement dans un plan. Le pivot symétrique 100 comprend un support fixe 2, un élément mobile 3 par rapport au support fixe 2 et trois lames flexibles principales 4 reliant chacune l'élément mobile 3 au support 2. Les lames flexibles principales 4 permettent à l'élément mobile 3 de se déplacer par rapport au support fixe 2. Par flexion des lames flexibles principales 4, l'élément mobile 3 peut se déplacer par rapport au support 2 dans un mouvement rotatif sur lui-même autour d'un centre de rotation. Les lames principales 4 sont, de préférence, de même longueur et réparties angulairement de manière uniforme autour d'une partie centrale de l'élément mobile 3.

Selon l'invention, le pivot symétrique 100 comprend des tables de translation 5, chaque table de translation 5 étant jointe à une extrémité d'une lame flexible principales 4 différente. Dans ce mode de réalisation, la table de translation 5 est agencée en série entre le support fixe 2 et ladite lame flexible principale 4 correspondante. La table de translation 5 est jointe au support fixe 2 et à une première extrémité de la lame flexible principale 4 correspondante, la lame flexible principale 4 étant jointe à la partie centrale par une seconde extrémité.

Ainsi, le pivot symétrique 100 comprend trois couples, chaque couple étant formé d'une lame flexible principale 4 et d'une table de translation 5 agencés en série. Les couples sont répartis angulairement autour de la partie centrale, chaque lame principale 4 étant jointe par une extrémité à la partie centrale. Les couples, notamment les lames principales 4, forment un angle d'environ 120° entre eux. La partie centrale est par exemple une portion de cylindre circulaire. Dans ce mode de réalisation, l'élément mobile 3 comprend la partie centrale. Les premières tables de translation 5 sont les mêmes que celles décrites dans les modes de réalisation des guidages flexibles décrits précédemment.

L'élément mobile 3 comprend en outre un balancier 39, qui est en forme d'anneau. Le balancier 16 comporte une partie annulaire 41 externe et des bras 42, ici trois bras, joignant la partie annulaire 41 à une jonction axiale 43 par rapport à la partie annulaire 41. Les bras 42 sont concentriques et de même longueurs. Le balancier 39 est assemblé sur la partie centrale par la jonction 43. De préférence, la partie centrale et la jonction 43 sont monoblocs. Ainsi, le balancier 39 est centré par rapport à la partie centrale. Dans ce mode de réalisation, le balancier est formé d'une même matière, c'est-à-dire qu'il est monobloc.

Lorsque le balancier 39 est en mouvement, il suit, dans le plan du balancier 39, un mouvement de rotation périodique dans un sens, puis dans l'autre sens, autour d'un axe passant par la jonction 43 et la partie centrale. Les lames flexibles principales 4 se courbent et ont une fonction de ressort rappel du balancier 39 pour le faire tourner dans l'autre sens et réciproquement. Les tables de translation 5 permettent aux lames principales 4 de se déplacer longitudinalement en même temps qu'elles se courbent. Les parties rigides 6 des tables de translation 5 se rapprochent de la partie centrale grâce aux lames secondaires lorsque les lames principales 4 se courbent, et s'éloignent de la partie centrale lorsque les lames principales 4 deviennent droites. Ainsi, on conserve un isochronisme du mouvement du balancier 39.

Les modes de réalisation des pivots 90, 100 des figures 10 et 11 comprennent en outre des moyens de réglage de l'anisochronisme sur l'une des tables de translation 5.

Dans le mode de réalisation du pivot 90 de la figure 10, les moyens de réglage sont ceux décrits dans la troisième variante du deuxième mode de réalisation du guidage flexible 40 de la figure 5. Les moyens de réglage comprennent un ressort et un élément de maintien déplaçable.

Dans le mode de réalisation du pivot symétrique 100 de la figure 11, les moyens de réglages sont ceux décrits dans le premier mode de réalisation non revendiqué du guidage flexible 1 de la figure 1. Les moyens de réglage comprennent des goupilles pour modifier la longueur effective des lames.

D'autres modes de réalisation sont également envisageables, bien que non représentés. Ainsi, il est possible d'agencer des moyens de réglage sur plusieurs tables de translation d'un même pivot symétrique.

Dans une autre variante, les tables de translation sont agencées en série entre les lames flexibles principales et l'élément mobile.

Dans la première variante du troisième mode de réalisation du guidage flexible 110, la partie rigide 16 de la table de translation 15 du guidage flexible 50 a une forme de U, et comprend un troisième segment parallèle aux lames secondaires 7, 8 en position de repos. Le premier et le troisième segment sont agencés de part et d'autre des lames secondaires 7, 8 qui pénètrent à l'intérieur du U pour être jointe au deuxième segment. Les moyens de réglages sont munis d'un ressort 51 et d'un élément mobile 44. Le ressort 51 relie l'élément mobile 44 à la partie rigide 16 de la table de translation 15. En particulier, le ressort 51 est agencé pour s'étirer ou se comprimer parallèlement à la lame principale 4 et perpendiculairement aux lames secondaires 7, 8. Le ressort 51 est relié au troisième segment de la partie rigide 16. L'élément mobile 44 est déplaçable en de multiples positions par rapport à la partie rigide 16. Ainsi, on étire ou comprime plus ou moins le ressort 51, qui exerce alors une force plus ou moins importante sur la partie rigide 16 de la table de translation 15.

Dans la deuxième variante du troisième mode de réalisation du guidage flexible 120, les moyens de réglage comprennent une deuxième table de translation 47 dotée d'une deuxième partie rigide 49 et de lames flexibles tertiaires 48. La partie rigide 46 de la première table de translation 45 a une forme de coude en angle droit, le coude comportant deux segments sensiblement perpendiculaires. La lame flexible principale 4, est jointe au premier segment, tandis que les lames secondaires 7, 8 sont jointes au deuxième segment. Le deuxième segment de la partie rigide 46 est allongé. La deuxième partie rigide 49 de la deuxième table de translation 47 a aussi une forme de coude en angle droit, le coude comportant deux segments sensiblement perpendiculaires. Le premier segment de la deuxième partie rigide 49 est sensiblement parallèle au premier segment de la première partie rigide 46, tandis que le deuxième segment de la deuxième partie rigide 49 est sensiblement parallèle au premier segment de la première partie rigide 46. Les segments des première et deuxième parties rigides 46, 49 se font face deux à deux. Le guidage flexible 120 comprend au moins une lame tertiaire, de préférence quatre lames tertiaires 48, reliant les deuxièmes segments des deux parties rigides 46, 49 l'une avec l'autre. Les lames tertiaires 48 sont sensiblement parallèles aux lames secondaires 7,8 et sensiblement perpendiculaires à la lame principale 4, en position de repos du guidage flexible 120.

L'invention se rapporte également à un mécanisme résonateur, notamment pour mouvement d'horlogerie, non représenté sur les figures. Le mécanisme résonateur est muni d'un guidage flexible ou d'un pivot selon l'un des modes de réalisation décrits ci-dessus.

Naturellement, l'invention n'est pas limitée aux modes de réalisation décrits en référence aux figures et des variantes pourraient être envisagées sans sortir du cadre de l'invention. On peut notamment imaginer un nombre de couples formé d'une lames flexible principal et d'une table de translation, supérieur ou inférieur aux exemples décrits.

## Revendications

1. Guidage flexible (1, 10, 20, 30, 40, 60, 70, 80, 110, 120) pour un mécanisme résonateur rotatif, notamment d'un mouvement d'horlogerie, le guidage (1, 10, 20, 30, 40, 60, 70, 80, 110, 120) comprenant un support fixe (2), un élément mobile (3) par rapport au support fixe (2), au moins une lame flexible principale (4) permettant à l'élément mobile (3) de se déplacer par rapport au support fixe (2) par flexion de la ou des lames flexibles principales (4) dans un mouvement rotatif autour d'un centre de rotation, le guidage flexible (1, 10, 20, 30, 40, 60, 70, 80, 110, 120) étant agencé sensiblement dans un plan, le guidage flexible (1, 10, 20, 30, 40, 60, 70, 80, 110, 120) comprenant au moins une première table de translation (5, 15, 25, 45) jointe à une extrémité de la lame flexible principale (4), de sorte que la première table de translation (5, 15, 25, 45) soit configurée pour se déplacer en translation au moins en partie sous l'effet de la flexion de la lame flexible principale (4), le guidage flexible (1, 10, 20, 30, 40, 60, 70, 80, 110, 120) étant **caractérisé en ce qu'**il comporte des moyens de réglage de la rigidité de la première table de translation (5, 15, 25, 45), les moyens de réglage comprenant un organe d'application d'une force ou d'un couple sur la partie rigide (6, 16, 26, 22, 31, 49) d'une table de translation (5, 15, 25, 19, 34, 47).

2. Guidage flexible selon la revendication 1, **caractérisé en ce que** la première table de translation (5, 15, 25, 45) comprend au moins deux lames flexibles secondaires (7, 8), et une première partie rigide (6, 16, 26), les lames flexibles secondaires (7, 8) étant jointes par une extrémité à la partie rigide (6, 16, 26), et par une autre extrémité, soit au support fixe (2), soit à l'élément mobile (3), les lames flexibles secondaires (7, 8) étant sensiblement perpendiculaires à la lame flexible principale (4) en position de repos du guidage flexible (1, 10, 20, 30, 40, 60, 70, 80, 110, 120).

3. Guidage flexible selon la revendication 1 ou 2, **caractérisé en ce que** la force ou le couple est dirigé parallèlement à aux lames flexibles secondaires (7, 8) en position de repos du guidage flexible (10, 20, 30, 40, 60, 70, 80).

4. Guidage flexible selon la revendication 1 ou 2, **caractérisé en ce que** la force ou le couple est dirigé perpendiculairement aux lames flexibles secondaires (7, 8) en position de repos du guidage flexible (50, 110, 120).

5. Guidage flexible selon l'une, quelconque, des revendications précédentes, **caractérisé en ce que** les moyens de réglage comprennent une deuxième table de translation (17, 34, 47) agencée entre l'organe d'application et la partie rigide (6, 16, 26, 46) de la première table de translation (5, 15, 25, 45).

6. Guidage flexible selon la revendication 5, **caractérisé en ce que** la deuxième table de translation (17, 34, 45) comprend une deuxième partie rigide (21, 31, 49), et au moins une lame flexible tertiaire, de préférence deux ou quatre lames flexibles tertiaires (18, 37, 48), reliant la deuxième partie rigide (21, 31) à la première partie rigide (6, 16, 26) de la première table de translation (5, 15, 25), la ou les lames tertiaires (18, 37, 48) étant sensiblement perpendiculaires ou parallèles à la lame flexible principale (4) en position de repos du guidage flexible (60, 70, 80, 120).

7. Guidage flexible selon la revendication 5 ou 6, **caractérisé en ce que** les moyens de réglage comprennent une troisième table de translation (19) agencée entre l'organe d'application et la deuxième partie rigide (21, 31) de la deuxième table de translation (17, 34).

8. Guidage flexible selon la revendication 7, **caractérisé en ce que** la troisième table de translation (19) comprend une troisième partie rigide (22), au moins une lame quaternaire, de préférence deux lames quaternaires (24) reliant la deuxième partie rigide (21) au support (2) ou à la partie mobile (3), et au moins une lame quinquénaire, de préférence quatre lames quinquénaires (23), reliant la troisième partie rigide (22) à la deuxième partie rigide (21) de la deuxième table de translation (17), les lames quaternaire (24) et quinquénaire (23) étant sensiblement parallèles à la lame flexible principale (4) en position de repos du guidage flexible (60, 70).

9. Guidage flexible selon l'une, quelconque, des revendications précédentes, **caractérisé en ce que** l'organe d'application comprend une vis excentrique (9, 28) pour appuyer sur la partie rigide (6, 22) de la table de translation (5, 19).

10. Guidage flexible selon l'une, quelconque, des revendications 1 à 8, **caractérisé en ce que** l'organe d'application comporte un élément mobile (13, 44) et un ressort (14, 51) joignant l'élément mobile (13, 44) à la partie rigide (6, 16).

11. Guidage flexible selon l'une, quelconque, des revendications 1 à 8, **caractérisé en ce que** le l'organe d'application comprend un levier (32) et un élément flexible (29), le levier (32) permettant d'appliquer une force ou un couple prédéfini sur la partie rigide (31) de la table de translation (34) au moyen de l'élément flexible (29).

12. Guidage flexible selon l'une, quelconque, des revendications 1 à 8, **caractérisé en ce que** l'organe d'application comporte des aimants (11, 12), l'un des aimants (11) étant agencé sur la partie rigide (6) de la table de translation (5).

13. Guidage flexible selon la revendication 8, **caractérisé en ce que** la partie rigide (6, 16, 21, 22, 26, 31, 46) forme un coude, de sorte que des lames de type différent joignant la partie rigide (6, 16, 21, 46) des première (5) ou deuxième tables de translation (17, 34, 45) soient perpendiculaires l'une par rapport à l'autre.

14. Pivot (90, 100), **caractérisé en ce qu'**il comprend au moins deux guidages flexibles, de préférence trois pour être symétrique, chaque guidage étant formé d'une lame principale (4) et d'une table de translation (5) reliée à un support (2) ou à un élément mobile (3), les couples étant répartis angulairement autour d'une partie centrale, chaque lame principale (4) étant jointe par une extrémité à la partie centrale, l'un au moins des guidages flexibles (5) étant défini selon l'une, quelconque, des revendications précédentes.

15. Pivot selon la revendication 14, **caractérisé en ce que** l'élément mobile (3) comprend la partie centrale.

16. Pivot selon la revendication 14 ou 15, **caractérisé en ce que** l'élément mobile (3) comprend un balancier (39) centré sur la partie centrale.

17. Mécanisme résonateur rotatif, notamment pour mouvement horloger, **caractérisé en ce qu'**il comprend un guidage flexible (1, 10, 20, 30, 40, 60, 70, 80, 110, 120) selon l'une, quelconque, des revendications 1 à 13, ou un pivot (90, 100) selon l'une, quelconque, des revendications 14 à 16.

## Patentansprüche

1. Flexible Führung (1, 10, 20, 30, 40, 60, 70, 80, 110, 120) für einen rotierenden Resonatormechanismus, insbesondere eines Uhrwerks, wobei die Führung (1, 10, 20, 30, 40, 60, 70, 80, 110, 120) einen festen Träger (2), ein bewegliches Element (3) relativ zum festen Träger (2), mindestens eine Hauptfeder (4), die es dem beweglichen Element (3) ermöglicht, sich in Bezug auf den festen Träger (2) durch Biegen der Hauptfeder(n) (4) in einer Drehbewegung um ein Drehzentrum zu bewegen, umfasst, wobei die flexible Führung (1, 10, 20, 30, 40, 60, 70, 80, 110, 120) im Wesentlichen in einer Ebene angeordnet ist, wobei die flexible Führung (1, 10, 20, 30, 40, 60, 70, 80, 110, 120) mindestens einen ersten Translationstisch (5, 15, 25, 45) aufweist, der an einem Ende der Hauptfeder (4) angeordnet ist, sodass der erste Translationstisch (5, 15, 25, 45) so ausgebildet ist, dass er sich zumindest teilweise infolge des Biegens der Hauptfeder (4) translatorisch bewegt, wobei die flexible Führung (1, 10, 20, 30, 40, 60, 70, 80, 110, 120) **dadurch gekennzeichnet ist, dass** sie
Einstellmittel zur Einstellung der Steifigkeit des ersten Translationstisches (5, 15, 25, 45) umfasst, die Einstellmittel
umfassend
ein Organ zum Aufbringen einer Kraft oder eines Drehmoments auf den starren Teil (6, 16, 26, 22, 31, 49) eines Translationstisches (5, 15, 25, 19, 34, 47).

2. Flexible Führung nach Anspruch 1, **dadurch gekennzeichnet, dass** der erste Translationstisch (5, 15, 25, 45) mindestens zwei sekundäre Federn (7, 8) und einen ersten starren Teil (6, 16, 26) umfasst, wobei die sekundären Federn (7, 8) mit einem Ende mit dem starren Teil (6, 16, 26) und mit einem anderen Ende entweder mit dem festen Träger (2) oder mit dem beweglichen Element (3) verbunden sind, wobei die sekundären Federn (7, 8) in der Ruhestellung der flexiblen Führung (1, 10, 20, 30, 40, 60, 70, 80, 110, 120) im Wesentlichen senkrecht zur Hauptfeder (4) angeordnet sind.

3. Flexible Führung nach Anspruch 1 oder 2, **dadurch gekennzeichnet, dass** die Kraft oder das Drehmoment in Ruhestellung der flexiblen Führung (10, 20, 30, 40, 60, 70, 80) parallel zu den sekundären Federn (7, 8) gerichtet ist.

4. Flexible Führung nach Anspruch 1 oder 2, **dadurch gekennzeichnet, dass** die Kraft oder das Drehmoment in Ruhestellung der flexiblen Führung (50, 110, 120) senkrecht zu den sekundären Federn (7, 8) gerichtet ist.

5. Flexible Führung nach einem beliebigen der vorhergehenden Ansprüche, **dadurch gekennzeichnet, dass** die Einstellmittel einen zweiten Translationstisch (17, 34, 47) umfassen, der zwischen dem Anwendungsorgan und dem starren Teil (6, 16, 26, 46) des ersten Translationstisches (5, 15, 25, 45) angeordnet ist.

6. Flexible Führung nach Anspruch 5, **dadurch gekennzeichnet, dass** der zweite Translationstisch (17, 34, 45) einen zweiten starren Teil (21, 31, 49) und mindestens eine tertiäre Feder, vorzugsweise zwei oder vier tertiäre Federn (18, 37, 48), umfasst, die den zweiten starren Teil (21, 31) mit dem ersten starren Teil (6, 16, 26) des ersten Translationstisches (5, 15, 25) verbinden, wobei die tertiären Federn (18, 37, 48) in der Ruhestellung der flexiblen Führung (60, 70, 80, 120) im Wesentlichen senkrecht oder parallel zur Hauptfeder (4) angeordnet sind.

7. Flexible Führung nach Anspruch 5 oder 6, **dadurch gekennzeichnet, dass** die Einstellmittel einen dritten Translationstisch (19) umfassen, der zwischen dem Anwendungsorgan und dem zweiten starren Teil (21, 31) des zweiten Translationstisches (17, 34) angeordnet ist.

8. Flexible Führung nach Anspruch 7, **dadurch gekennzeichnet, dass** der dritte Translationstisch (19) einen dritten starren Teil (22), mindestens eine quaternäre Feder, vorzugsweise zwei quaternäre Federn (24), die den zweiten starren Teil (21) mit dem Träger (2) oder dem beweglichen Teil (3) verbinden, und mindestens eine quinäre Feder, vorzugsweise vier quinäre Federn (23), die den dritten starren Teil (22) mit dem zweiten starren Teil (21) des zweiten Translationstisches (17) verbinden, umfasst, wobei die quaternären (24) und quinären Federn (23) in Ruhestellung der flexiblen Führung (60, 70) im Wesentlichen parallel zur Hauptfeder (4) angeordnet sind.

9. Flexible Führung nach einem beliebigen der vorhergehenden Ansprüche, **dadurch gekennzeichnet, dass** das Anwendungsorgan eine Exzenterschraube (9, 28) umfasst, um auf den starren Teil (6, 22) des Translationstisches (5, 19) zu drücken.

10. Flexible Führung nach einem beliebigen der Ansprüche 1 bis 8, **dadurch gekennzeichnet, dass** das Anwendungsorgan ein bewegliches Element (13, 44) und eine Feder (14, 51) umfasst, die das bewegliche Element (13, 44) mit dem starren Teil (6, 16) verbindet.

11. Flexible Führung nach einem beliebigen der Ansprüche 1 bis 8, **dadurch gekennzeichnet, dass** das Anwendungsorgan einen Hebel (32) und ein flexibles Element (29) umfasst, wobei der Hebel (32) es ermöglicht, mittels des flexiblen Elements (29) eine vorbestimmte Kraft oder ein vorbestimmtes Drehmoment auf den starren Teil (31) des Translationstisches (34) aufzubringen.

12. Flexible Führung nach einem beliebigen der Ansprüche 1 bis 8, **dadurch gekennzeichnet, dass** das Anwendungsorgan Magnete (11, 12) umfasst, wobei einer der Magnete (11) auf dem starren Teil (6) des Translationstisches (5) angeordnet ist.

13. Flexible Führung nach Anspruch 8, **dadurch gekennzeichnet, dass** der starre Teil (6, 16, 21, 22, 26, 31, 46) einen Knick bildet, so dass Federn unterschiedlicher Art, die den starren Teil (6, 16, 21, 46) des ersten (5) oder zweiten Translationstisches (17, 34, 45) verbinden, senkrecht zueinander angeordnet sind.

14. Drehteil (90, 100), **dadurch gekennzeichnet, dass** er mindestens zwei flexible Führungen, vorzugsweise drei zur Ausbildung einer Symmetrie, umfasst, wobei jede Führung aus einer Hauptfeder (4) und einem Translationstisch (5) gebildet ist, der mit einem Träger (2) oder einem beweglichen Element (3) verbunden ist, wobei die Drehmomente winkelmäßig um einen Mittelteil verteilt sind, wobei jede Hauptfeder (4) mit einem Ende mit dem Mittelteil verbunden ist, und wobei mindestens eine der flexiblen Führungen (5) nach einem beliebigen der vorhergehenden Ansprüche definiert ist.

15. Drehteil nach Anspruch 14, **dadurch gekennzeichnet, dass** das bewegliche Element (3) den Mittelteil umfasst.

16. Drehteil nach Anspruch 14 oder 15, **dadurch gekennzeichnet, dass** das bewegliche Element (3) einen um den Mittelteil zentrierten Unruhreif (39) umfasst.

17. Rotationsresonatormechanismus, insbesondere für ein Uhrwerk, **dadurch gekennzeichnet, dass** er eine flexible Führung (1, 10, 20, 30, 40, 60, 70, 80, 110, 120) nach einem beliebigen der Ansprüche 1 bis 13 oder ein Drehteil (90, 100) nach einem beliebigen der Ansprüche 14 bis 16 umfasst.

## Claims

1. A flexible guide (1, 10, 20, 30, 40, 60, 70, 80, 110, 120) for a rotary resonator mechanism, in particular of a horological movement, the guide (1, 10, 20, 30, 40, 60, 70, 80, 110, 120) comprising a fixed support (2), an element (3) movable relative to the fixed support (2), at least one main flexible strip (4) allowing the movable element (3) to move relative to the fixed support (2) by bending the main flexible strip(s) (4) in a rotary movement about a centre of rotation, the flexible guide (1, 10, 20, 30, 40, 60, 70, 80, 110, 120) being arranged substantially in a plane, the flexible guide (1, 10, 20, 30, 40, 60, 70, 80, 110, 120) comprising at least a first translation table (5, 15, 25, 45) joined to one end of the main flexible strip (4), so that the first translation table (5, 15, 25, 45) is configured to move in translation at least in part under the effect of the bending of the main flexible strip (4), the flexible guide (1, 10, 20, 30, 40, 60, 70, 80, 110, 120) being **characterised in that** it includes means for adjusting the rigidity of the first translation table (5, 15, 25, 45), the adjustment means comprising a member for applying a force or a torque to the rigid part (6, 16, 26, 22, 31, 49) of a translation table (5, 15, 25, 19, 34, 47).

2. The flexible guide according to claim 1, **characterised in that** the first translation table (5, 15, 25, 45) comprises at least two secondary flexible strips (7, 8), and a first rigid part (6, 16, 26), the secondary flexible strips (7, 8) being joined by one end to the rigid part (6, 16, 26), and by another end, either to the fixed support (2), or to the movable element (3), the secondary flexible strips (7, 8) being substantially perpendicular to the main flexible strip (4) in the rest position of the flexible guide (1, 10, 20, 30, 40, 60, 70, 80, 110, 120).

3. The flexible guide according to claim 1 or 2, **characterised in that** the force or the torque is directed parallel to the secondary flexible strips (7, 8) in the rest position of the flexible guide (10, 20, 30, 40, 60, 70, 80).

4. The flexible guide according to claim 1 or 2, **characterised in that** the force or the torque is directed perpendicular to the secondary flexible strips (7, 8) in the rest position of the flexible guide (50, 110, 120).

5. The flexible guide according to any one of the preceding claims, **characterised in that** the adjustment means comprise a second translation table (17, 34, 47) arranged between the application member and the rigid part (6, 16, 26, 46) of the first translation table (5, 15, 25, 45).

6. The flexible guide according to claim 5, **characterised in that** the second translation table (17, 34, 45) comprises a second rigid part (21, 31, 49), and at least one tertiary flexible strip, preferably two or four tertiary flexible strips (18, 37, 48), connecting the second rigid part (21, 31) to the first rigid part (6, 16, 26) of the first translation table (5, 15, 25), the tertiary strip(s) (18, 37, 48) being substantially perpendicular or parallel to the main flexible strip (4) in the rest position of the flexible guide (60, 70, 80, 120).

7. The flexible guide according to claim 5 or 6, **characterised in that** the adjustment means comprise a third translation table (19) arranged between the application member and the second rigid part (21, 31) of the second translation table (17, 34).

8. The flexible guide according to claim 7, **characterised in that** the third translation table (19) comprises a third rigid part (22), at least one quaternary strip, preferably two quaternary strips (24), connecting the second rigid part (21) to the support (2) or to the movable part (3), and at least one quinquennary strip, preferably four quinquennary strips (23), connecting the third rigid part (22) to the second rigid part (21) of the second translation table (17), the quaternary (24) and quinquennary (23) strips being substantially parallel to the main flexible strip (4) in the rest position of the flexible guide (60, 70).

9. The flexible guide according to any one of the preceding claims, **characterised in that** the application member comprises an eccentric screw (9, 28) to press on the rigid part (6, 22) of the translation table (5, 19).

10. The flexible guide according to any one of claims 1 to 8, **characterised in that** the application member includes a movable element (13, 44) and a spring (14, 51) joining the movable element (13, 44) to the rigid part (6, 16).

11. The flexible guide according to any one of claims 1 to 8, **characterised in that** the application member comprises a lever (32) and a flexible element (29), the lever (32) allowing to apply a predefined force or torque to the rigid part (31) of the translation table (34) by means of the flexible element (29).

12. The flexible guide according to any one of claims 1 to 8, **characterised in that** the application member includes magnets (11, 12), one of the magnets (11) being arranged on the rigid part (6) of the translation table (5).

13. The flexible guide according to claim 8, **characterised in that** the rigid part (6, 16, 21, 22, 26, 31, 46) forms an elbow, so that strips of different type joining the rigid part (6, 16, 21, 46) of the first (5) or second translation tables (17, 34, 45) are perpendicular to each other.

14. A pivot (90, 100), **characterised in that** it comprises at least two flexible guides, preferably three to be symmetrical, each guide being formed of a main strip (4) and a translation table (5) connected to a support (2) or to a movable element (3), the pairs being distributed angularly around a central part, each main strip (4) being joined by one end to the central part, at least one of the flexible guides (5) being defined according to any one of the preceding claims.

15. The pivot according to claim 14, **characterised in that** the movable element (3) comprises the central part.

16. The pivot according to claim 14 or 15, **characterised in that** the movable element (3) comprises a lever (39) centred on the central part.

17. A rotary resonator mechanism, in particular for a horological movement, **characterised in that** it comprises a flexible guide (1, 10, 20, 30, 40, 60, 70, 80, 110, 120) according to any one of claims 1 to 13, or a pivot (90, 100) according to any one of claims 14 to 16.
